# EUROPEAN PATENT SPECIFICATION

(11) **EP 0 249 235 B1**
(45) Date of publication and mention of the grant of the patent: **08.09.1993**
(21) Application number: 87108476.0
(22) Date of filing: 12.06.1987
(51) Int. Cl.: G01B 11/06, G01N 21/21

(54) **Film thickness-measuring apparatus using linearly polarized light**
Schichtdickenmessgerät mit linearpolarisiertem Licht
Appareil pour mesurer l'épaisseur d'une couche par la lumière à polarisation linéaire

(30) Priority: 13.06.1986 JP 137458/86; 30.07.1986 JP 179145/86
(43) Date of publication of application: 16.12.1987
(73) Proprietor: NIPPON KOKAN KABUSHIKI KAISHA, Tokyo 100 (JP)
(72) Inventor: Sano, Kazuo c/o Patent & License, 1-2, 1-chome Maurnouchi Chiyoda-ku Tokyo (JP); Miyazaki, Takao c/o Patent & License, 1-2, 1-chome Maurnouchi Chiyoda-ku Tokyo (JP); Yamada, Yoshiro c/o Patent & License, 1-2, 1-chome Maurnouchi Chiyoda-ku Tokyo (JP)
(74) Representative: Sajda, Wolf E., Dipl.-Phys.

(56) References cited:
- EP-A- 0 163 466
- US-A- 3 994 586
- SURFACE SCIENCE, volume 56, no. 1, June 1976, North Holland Publishing Co., pages 212-220 ; T. SMITH : "An automated scanning ellipsometer"

## Description

The present invention relates to a film thickness-measuring apparatus, comprising
- light-applying means including a polarizer for applying a linearly polarized light beam, having a predetermined polarizing angle, to a film on an object at a predetermined incidence angle in order to measure the thickness of the film;
- beam-splitting means for splitting a light beam reflected from the film into a plurality of light beams;
- a plurality of analyzers for extracting different polarized light components from the light beams supplied from the beam-splitting means;
- photoelectric conversion means for converting the light beams into corresponding electric signals representing the intensities of the respective light beams; and
- calculation means for performing predetermined calculations on the electric signals supplied from the photoelectric conversion means to thereby obtain two ellipsometric parameters, an amplitude ratio, and a phase, and then calculate the thickness of the film from the ellipsometric parameters thus obtained.

Such a film thickness-measuring apparatus is suitable, for example, for on-line measuring of the thickness of an oil film coated on the surface of a steel plate being processed in, for example, a rolling line or a plating line, and can measure the thickness of the oil film without contacting the oil film.

An apparatus of the type specified above is known from the publication "An Automated Scanning Ellipsometer" by T. Smith, published in SURFACE SCIENCE, vol. 56, No. 1, June 1976, North-Holland Publishing Co., pages 212 to 220. In this document, the apparatus comprises a light-source, a beam expander, a profile filter, a polarizer, an iris, analyzer prisms as well as photodetectors. As shown in the configuration of Fig. 1 of this document, two detectors are positioned in order to detect light beams reflected at the same portion of the surface of a sample to be measured. However, a third detector is not positioned in order to detect a light beam reflected at the same portion as those beams which are detected by the first two detectors. Accordingly, the three detectors are not positioned in the same spatial distribution as the reflected beam reflected from the sample to be measured.

The ellipsometry method is generally known as a method of measuring the thickness of a light-transmitting film such as an oil film coated on the surface of a steel plate. This method is based on the fact that the difference in state of polarization between the light reflected from the substrate steel plate with oil film coating and the light reflected from the steel plate without any coating is closely related to the thickness of the oil film. More specifically, thickness d of the oil film can be calculated from ratio ρ of the Fresnel complex amplitude reflection coefficient (rₚ) of the p component of the reflected light, which is parallel to the plane of incidence, to the Fresnel complex amplitude reflection coefficient (rₛ) of the s component of the reflected light, which is perpendicular to the plane of incidence. Ratio ρ (hereinafter called "reflection coefficient ratio") has the following relation with ellipsometric parameters ψ and Δ which serve to determine thickness d:

${\text{ρ = r}}_{\text{p}} {\text{/r}}_{\text{s}} {\text{= tanψexp}}^{\text{jΔ}} \text{(1).}$

Ellipsometric parameters ψ and Δ, thickness d, refractive index N₁ of the oil film, refractive index N₂ of the steel plate, incidence angle φ₀ of the light applied to the surface of the oil film, and wavelength λ of the applied light have a relationship which can be given as:

$\text{ρ = F (d, N₁, N₂, φ₀, λ) (2).}$

Hence, thickness d can easily be calculated from parameters ψ and Δ.

Some methods of obtaining ellipsometric parameters ψ and Δ are known. One of them is to apply elliptically polarized light generated through a compensator and a polarizer to the surface of a film whose thickness need be measured, and detect the light reflected from the layer after the light is passed through an analyzer. The analyzer and polarizer are rotated in the plane at right angles to the axis of the reflected light beam, until the analyzer passes no light at all. The angles which the analyzer and polarizer have been rotated are then measured. Finally, ellipsometric parameters ψ and Δ are obtained from the polarizing angle and the analyzing angle.

A method of obtaining ellipsometric parameter Δ is known. In this method, an analyzer of the same type as described above is rotated at high speed by an electric motor, the amount of the light passing through the analyzer is modulated with the number of rotations per unit time of the analyzer, and a photoelectric output is thereby produced. The photoelectric output, thus produced, has a component which represents ellipsometric parameter Δ. Hence, parameter Δ can be obtained from the photoelectric output.

The first-mentioned method has a drawback, however. It takes few seconds to adjust the orientations of the polarizer and the analyzer so that no light is transmitted through them. Therefore, this method cannot accurately measure the thickness of the layer in the case where the film is moving fast.

The second-mentioned method is disadvantageous, too. The ellipsometric parameter, Δ, much depends on the reflection coefficient of the film, the amount of the light emitted from a light source, and some other similar factors. Hence, parameter Δ obtained by this method can not be so reliable. Further, this method can provide only parameter Δ, one of the two ellipsometric parameters. Therefore, the method cannot be applied to other uses than thickness-measuring, such as measuring of the refractive index of the film.

It is accordingly the object of the present invention to provide a film thickness-measuring apparatus for accurately measuring the thickness of a film coated on an object moving at high speed, without contacting the film.

According to the present invention, there is provided a film thickness-measuring apparatus which is characterized in that the beam-splitting means are provided for splitting the light beam reflected from the film into at least three light beams with the same spatial distribution as the reflected beam; in that the analyzers are provided for extracting at least three linearly polarized light components of different respective polarizing angles from the at least three light beams, respectively; in that the photoelectric conversion means are provided for converting the at least three light components into at least three corresponding electric signals representing the intensities of the respective at least three light components; and in that the calculation means are provided for performing calculations of the at least three electric signals supplied from the photoelectric conversion means.

A further development of the apparatus according to the invention is characterized in that the beam-splitting means comprise three optical flats made of the same material, having the same shape, positioned in parallel to one another, for splitting the light beam reflected from the film, into three light beams.

A specific embodiment of the apparatus according to the invention is characterized in that the photoelectric conversion means comprise lens means for focusing the at least three light components, respectively, at a focal point; aperture means located at the focal point; and photoelectric detector means for generating an electric signal representing the intensity of a respective light component, from the at least three light components, passed through the aperture means.

A further development of the apparatus according to the invention is characterized in that a polarizing angle of the polarizer is Θ = 45° and in that the analyzing angles of the analyzer means are α1 = 0°, α2 = 45° and α3 = -45° so that the calculation means calculate the amplitude ratio ψ and the phase Δ in accordance with the following equations: 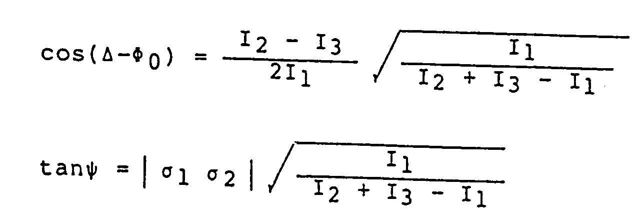
where I1, I2 and I3 are the intensities of the three light beams supplied from the three optical flats, which are represented by the electric signals generated by the photoelectric conversion means, wherein φ0 and | σ1σ2 | are specific to the optical flats with σ1 and σ2 being reflection coefficient ratios, and φ0 is a phase difference between phases of ratios σ1 and σ2.

A specific embodiment of the apparatus according to the invention is characterized in that the beam-splitting means comprise four optical flats made of the same material, having the same shape, positioned in parallel to one another, for splitting the light beam reflected from the film, into three light beams, and in that the analyzers comprise a plurality of analyzers having different analyzing angles, for passing the light beams supplied from the optical flats.

A specific embodiment of the apparatus according to the invention is characterized in that the apparatus has a measuring view the size of which is given as

$\text{D ≦ 7,0 x 10⁻³ f}$

where f is the focal distance of the lens means and D is the diameter of the aperture means.

A further development of the apparatus according to the invention is characterized in that the polarizer of the light-applying means applies at least two linearly polarized light beams having different wavelengths and a predetermined orientation angle, to the film at the same predetermined incidence angle in order to measure the thickness of the film.

In such a specific embodiment of the apparatus according to the invention it is provided that the apparatus comprises two light-applying means connected in parallel and provided with shutters which are alternately opened and closed by driving means.

The invention will be more fully understood from the following detailed description of preferred embodiments of the invention with reference to the accompanying drawings, in which:
Fig. 1 is a block diagram showing the optical system of a first embodiment of the present invention;
Fig. 2 is an enlarged view of that portion of a film to which a beam of linearly polarized light is applied to measure the thickness of the film;
Fig. 3 is a block diagram showing the optical system of a modified embodiment of the present invention;
Fig. 4 is a block diagram showing the signal-processing section used in the first embodiment;
Fig. 5 is a flow chart explaining the software operation on the microcomputer in Fig. 4;
Fig. 6 is a block diagram showing the optical system used in a second embodiment of the invention;
Fig. 7 is a block diagram of the circuit incorporated in the second embodiment;
Fig. 8 is a block diagram showing the optical system used in a third embodiment of this invention;
Fig. 9 is a block diagram illustrating the electric circuit used in the third embodiment;
Fig. 10 is a graph representing the relationship between the phase-cosines of the light beam reflected from the substrate for 2 wavelengths;
Fig. 11 is a graph illustrating the relationship between the thickness of a film and the phase cosine difference;
Fig. 12 is a timing chart showing two shutter drive signals;
Fig. 13 is a flow chart explaining the software operation of the embodiment shown in Fig. 9; and
Fig. 14 is a graph representing the relationship between the amount of oil applied to the surface of an object and the measured thickness of the oil film coated on the object.

A few embodiments of the present invention will now be described in detail, with reference to the drawings attached hereto.

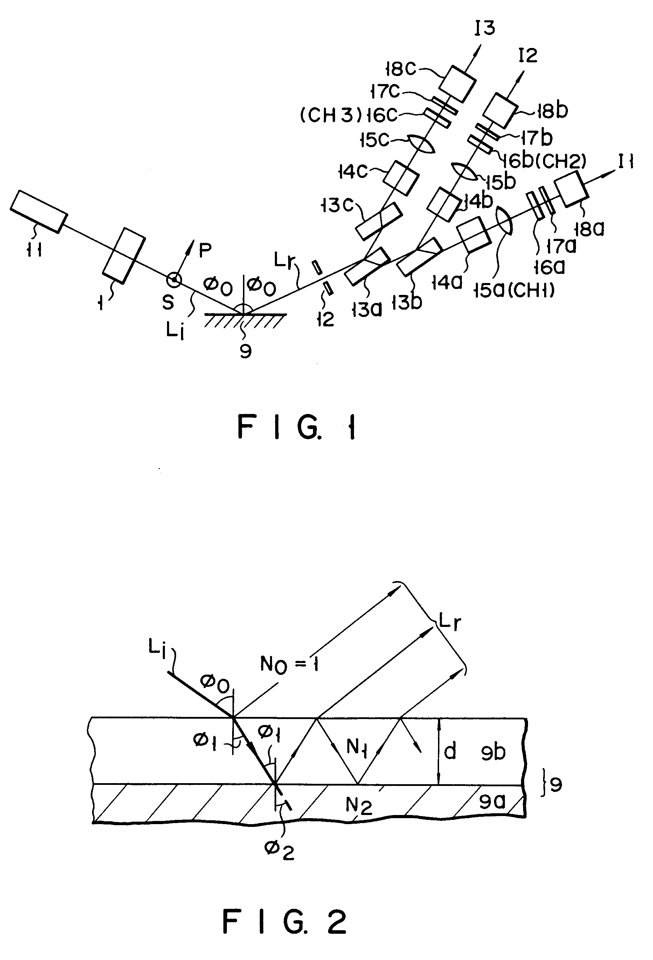

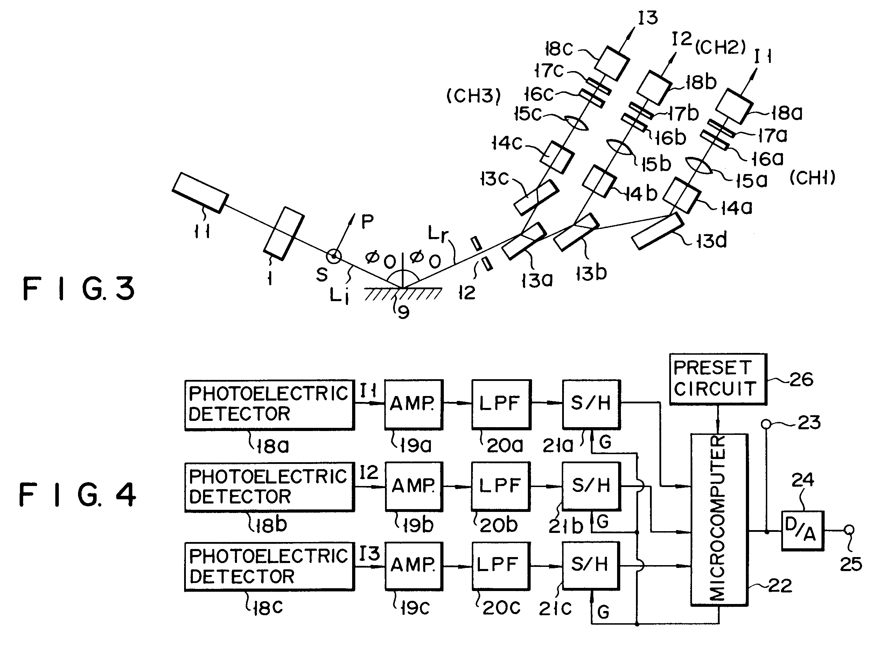

Figs. 1 to 5 show a first embodiment of the invention. Fig. 1 schematically illustrates the optical system of this embodiment. Fig. 4 is a block diagram showing the signal-processing section of the embodiment. As is shown in Fig. 1, a monochromatic light source 11 emits a collimated, monochromatic light. This monochromatic light is applied to a polarizer 1. The polarizer 1 converts the light to a linearly polarized light Lᵢ having a prescribed orientation angle ϑ. Polarized light Lᵢ is applied to an object 9 at an incidence angle φ₀.

As is shown in Fig. 2, object 9 consists of a steel plate 9a and an oil film 9b coated on one surface of the plate 9a. In this instance, polarized light Lᵢ is applied to the object 9 to measure the thickness of the oil film 9b. (According to the invention, the oil film 9b can be replaced by a resin film, a semiconductor oxide film, or a metal film, whose thickness will be measured.) The air, to which the oil film 9b is exposed, has refractive an index No (= 1), the oil film 9b has a refractive index N₁, and the steel plate 9a has refractive an index N₂. Let us assume that the oil film 9b has a thickness d. Light Lᵢ applied to the surface of the oil film 9b at an incidence angle φ₀ is refracted in the oil film 9b, and is thus incident on the surface of the steel plate 9a at an angle φ₁. Light Lᵢ is then reflected from the surface of the plate 9a and passes through the oil film 9b. It finally emerges out of the oil film 9b, as reflected light Lᵣ.

Let us assume that polarized light Lᵢ is applied along a Z axis within the plane of incidence, which is parallel to the drawing of Fig. 1. The S axis is defined orthogonal to the plane of incidence, the P axis orthogonal to both the Z axis and the S axis, so that the P axis, S axis, and Z axis define a right-handed Cartesian coordinate system.

Light Lᵣ reflected from the object 9 at an reflection angle φ₀ passes through an aperture 12, and thereby changes to a light beam having a controlled diameter. This light beam is split into three beams by three optical flats 13a, 13b and 13c which are made of the same material and have the same shape. These optical flats 13a, 13b and 13c constitute a beam-splitting section. They are made of transparent, optically isotropic material, spaced apart from one another, and positioned parallel to one another. The thickness of the optical flats 13a, 13b and 13c, and the distances between them are determined such that none of these optical flats emits multiplex reflected light.

The light beam passing through the optical flats 13a and 13b propagates in a beam channel ch1. The light beam reflected by the optical flat 13b propagates in a beam channel ch2, and the light beam reflected by the optical flat 13c propagates in a beam channel ch3. Beam channels ch2 and ch3 are parallel to each other. In the beam channel ch1, an analyzer 14a, a focusing lens 15a, an aperture 16a, an interference filter 17a, and a photoelectric detector 18a are provided. In the beam channel ch2, an analyzer 14b, a focusing lens 15b, an aperture 16b, an interference filter 17b, and a photoelectric detector 18b are provided. Similarly, in the beam channel ch3, an analyzer 14c, a focusing lens 15c, an aperture 16c, an interference filter 17c, and a photoelectric detector 18c are provided. The analyzers 14a, 14b and 14c have specific orientation angles α₁, α₂ and α₃. The focusing lenses 15a, 15b and 15c have the same focal distance. The apertures 16a, 16b and 16c are located at the focal points of the focusing lenses 15a, 15b and 15c, respectively. The interference filters 17a, 17b and 17c remove the light which has externally entered the optical system. The photoelectric detectors 18a, 18b and 18c convert the output beams from the filters 17a, 17b and 17c into electric signals I₁, I₂ and I₃ which represent the intensities of these light beams. The signals I₁, I₂ and I₃ undergo predetermined processings in the signal-processing section shown in Fig. 4, thereby to provide ellipsometric parameters ψ and Δ, from which the thickness d of the oil film 9b will be calculated.

As is shown in Fig. 4, the electric signals I₁, I₂ and I₃ output from the photoelectric detectors 18a, 18b and 18c are amplified by amplifiers 19a, 19b and 19c, and are then supplied to low-pass filters 20a, 20b and 20c. The low-pass filters 20a, 20b and 20c remove noise from the output signals of the amplifiers 19a, 19b and 19c. The output signals of the low-pass filters 20a, 20b and 20c are input to sample-and-hold circuits (hereinafter called "S/H circuits") 21a, 21b and 21c. The S/H circuits 21a, 21b and 21c sample and hold the output signals of the beam channels ch1, ch2 and ch3 simultaneously, by using a gate signal G supplied from microcomputer 22. Hence, the output signals I₁, I₂ and I₃ of the channels ch1, ch2 and ch3 are input to a microcomputer 22 at the same time. The microcomputer 22 processes the signals I₁, I₂ and I₃ as will be explained below, thereby providing digital data representing the thickness d of the oil film 9b. The digital data is output from the microcomputer 22 via an output terminal 23. It is also input to a D/A converter 24 and converted to an analog signal. The analog signal, thus provided, is output from an output terminal 25. The output terminal 25 is connected to a chart recorder (not shown). A preset circuit 26 is connected to the microcomputer 22, for inputting gains for the channels ch1, ch2 and ch3, the value of Φ₀, | σ₁ σ₂ | and a minimum light intensity I₃ₘᵢₙ to the microcomputer 22.

The microcomputer 22 processes the output signals I₁, I₂ and I₃ of the channels ch1, ch2 and ch3, by using the Jones matrix method, in order to calculate the ellipsometric parameters ψ and Δ. These parameters can be defined by the following equation:

${\text{r}}_{\text{p}} {\text{/r}}_{\text{s}} {\text{= tanψe}}^{\text{jΔ}} \text{(3),}$

where rₚ is the Fresnel complex amplitude-reflection coefficient of the electric vector of the P component of polarized light Lᵢ, and rₛ is the Fresnel complex amplitude-reflection coefficient of the electric vector of the S component of polarized light Lᵢ.

The ratio σ₁ of the Fresnel complex amplitude-transmission coefficient tₛ' of the S component of reflected light Lᵣ applied to each optical flat to the Fresnel complex amplitude-transmission coefficient tₚ' of the P component of the same light Lᵣ is given by equation (4). The ratio σ₂ of the Fresnel complex amplitude-reflection coefficient rₛ' of the S component of reflected light Lᵣ applied to each optical flat to the Fresnel complex amplitude-reflection coefficient rₚ' of the P component of light Lᵣ is given by equation (5):

${\text{σ₁ = t}}_{\text{s}} {\text{'/t}}_{\text{p}} \text{' = | σ₁ | ejΦ₁ (4)}$
${\text{σ₂ = r}}_{\text{s}} {\text{'/r}}_{\text{p}} \text{' = | σ₂ | ejΦ₂ (5),}$

where Φ₁ is the phase of ratio σ₁, and Φ₂ is the phase of ratio σ₂. Hence, the phase difference between σ₁ and σ₂ can be given:

$\text{Φ₀ = Φ₁ - Φ₂ (6).}$

The amplitude-reflectivities rₛ and rₚ, both in equation (3), are given in the form of the Fresnel reflection coefficient, which is represented by the following formula: 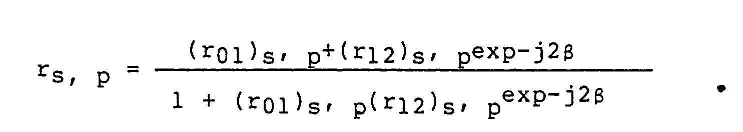
Therefore, the S component, (r_{kℓ})ₛ, and the P component, (r_{kℓ})ₚ, are given: 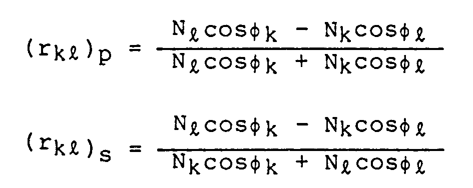
where

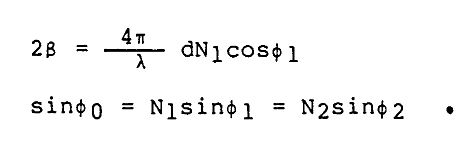

In the equation showing 2β, λ represents the wavelength of polarized light Lᵢ.

From the equations given above, the signals I₁, I₂ and I₃, which represent the intensities of the light beams output from the channels ch1, ch2 and ch3 after signal processing, are given as follows:

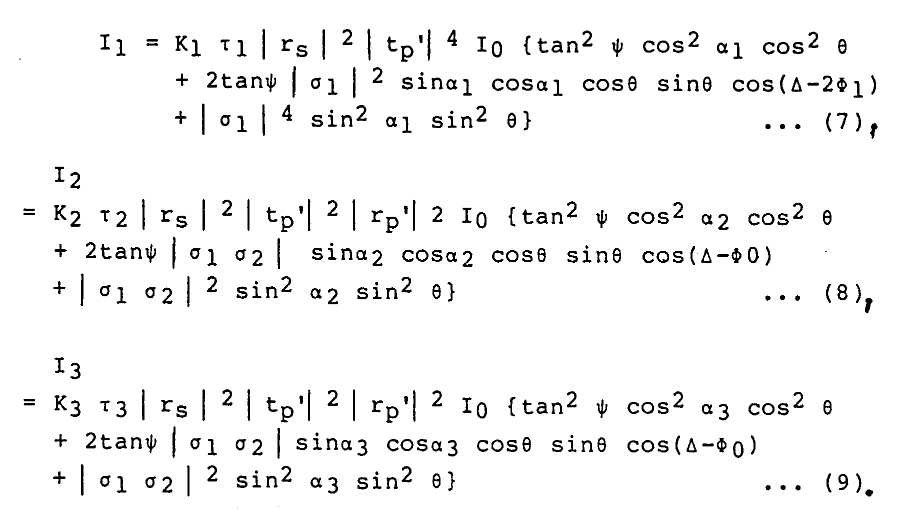

In equations (7), (8) and (9), K₁, K₂ and K₃ are the gains of the amplification circuits 19a, 19b, 19c for the channels ch1, ch2 and ch3, τ₁, τ₂ and τ₃ are the light-transmittances of the analyzers 14a, 14b and 14c and the photoelectric detectors 18a, 18b and 18c for the channels ch1, ch2 and ch3, I₀ is the intensity of polarized light Lᵢ incident on the oil film 9b, ϑ is the polarizing angle of the polarizer 1, and α₁, α₂ and α₃ are the analyzing angles of the analyzers 14a, 14b and 14c for the beam channels ch1, ch2 and ch3.

Gains K₁, K₂ and K₃ for the channels ch1, ch2 and ch3 are adjusted such that the photoelectric detectors 18a, 18b and 18c output signals I₁, I₂ and I₃ having an equal value for any object, ( $\text{IG tan² ψ₀ cos² ϑ₀}$ ), when the orientation angle of the polarizer 1 has a value ϑ₀ other than 90° and the orientation angles α₁, α₂ and α₃ of the analyzers 14a, 14b and 14c are set at 0°. Hence, 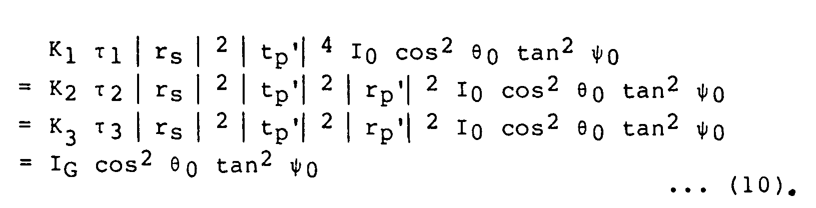
Using equation (10), we can change equations (7), (8) and (9) to the following:

${\text{I₁ = I}}_{\text{G}} \text{{tan² ψ cos² α₁ cos² ϑ + 2tanψ | σ₁ | ² sinα₁ cosα₁ cosϑ sinϑ x cos(Δ-2Φ₁) + | σ₁ | ⁴ sin² α₁ sin² ϑ} (7'),}$
${\text{I₂ = I}}_{\text{G}} \text{{tan² ψ cos² α₂ cos² ϑ + 2tanψ | σ₁ σ₂ | sinα₂ cosα₂ cosϑ sinϑ x cos(Δ-Φ₀) + | σ₁ σ₂ | ² sin² α₂ sin² ϑ} (8'),}$
${\text{I₃ = I}}_{\text{G}} \text{{tan² ψ cos² α₃ cos² ϑ + 2tanψ | σ₁ σ₂ | sinα₃ cosϑ sinϑ x cos(Δ-Φ₀) + | σ₁ σ₂ | ² sin² α₃ sin² ϑ} (9' ).}$

When the polarizer 1 has an orientation angle ϑ of 45°, and the analyzers 14a, 14b and 14c have an orientation angle α₁ of 0°, an orientation angle α₂ of 45°, and an orientation angle α₃ of -45°, the output signals I₁, I₂ and I₃ of the beam channels ch1, ch2 and ch3 will be given as follows: 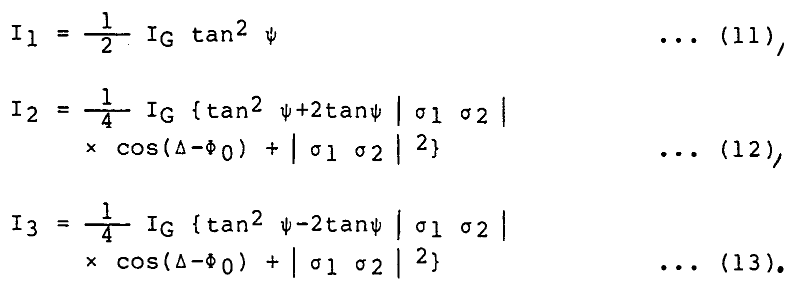
From equations (11), (12) and (13), we can obtain: 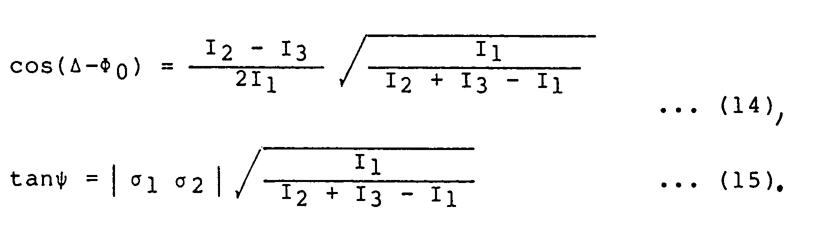
Both Φ₀ and | σ₁ σ₂ | are invariables which are specific to the optical flats 13a, 13b and 13c. Therefore, when a linearly polarized light beam having an orientation angle ϑ₀ is applied to the beam-splitting section, these invariables Φ₀ and | σ₁ σ₂ | are given as follows from the output signals I_{1,0} I_{2,0} and I_{3,0} obtained in this instance: 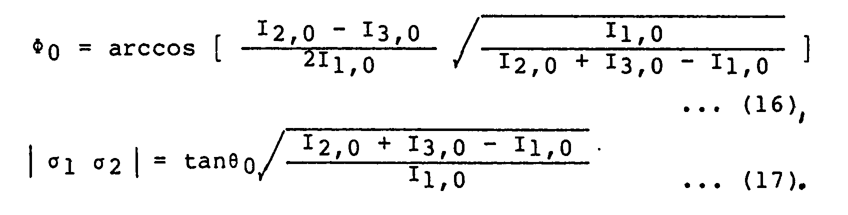
In the case where a glass plate, whose refractive index n is known, is being measured Φ₀ and | σ₁ σ₂ | can be given as follows from the output signals I₁, I₂ and I₃: 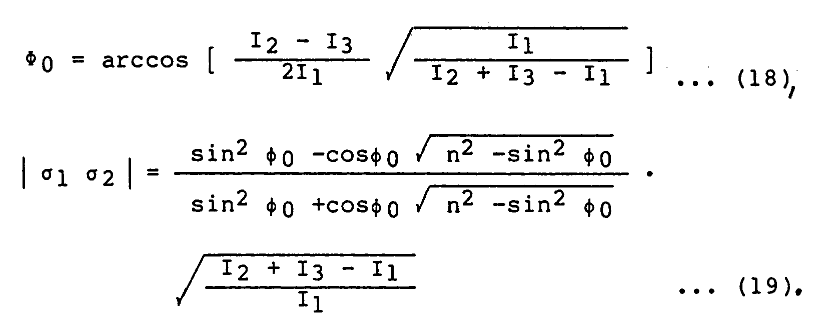
In equation (19), φ₀ represents the incidence angle of polarized light Lᵢ. Hence, ellipsometric parameters Ψ and Δ can be simultaneously obtained by substituting these values for invariables Φ₀ and | σ₁ σ₂ |, in (14) and (15). In fact, the invariable Φ₀ is very small, nearly equal to 0°, and the invariable | σ₁ σ₂ | is determined by the incidence angle φ₀ of polarized light Lᵢ, and takes the value of about 2 when the angle φ₀ is 70°.

Since, as is evident from equations (14) and (15), both cos(Δ - Φ₀) and tan ψ are obtained from the output signals I₁, I₂ and I₃ in a dimensionless form, and the signals I₁, I₂ and I₃ are simultaneously produced, cos(Δ - Φ₀) and tan ψ are not influenced by any changes in the intensity of reflected light Lᵣ which have resulted from the changes in the intensity of the light emitted from the light source 11.

As long as φ ≠ 0° or 90°, α₁ = 0°, α₂ = -α₃ (α₂ ≠ 0, 90°) are maintained ψ and Δ can also be obtained. In this case, the equations (14) and (15) are changed to the following:

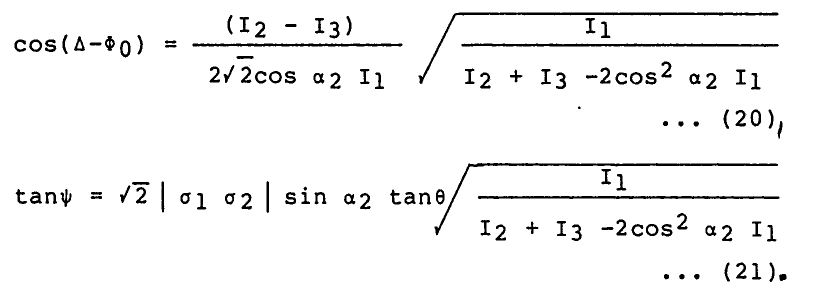

The apertures 16a, 16b and 16c are provided in front of the photoelectric detectors 18a, 18b and 18c in order to eliminate a measuring error due to the inclination of object 9. More specifically, apertures 16a, 16b and 16c reduce the angle of view to ±0,2° or less. This is because the measuring error will amount to as much as tens of angstroms when the object 9 is inclined by 1,0°. The angle of view can be reduced to said value when the apertures 16a, 16b and 16c have a diameter D given below:

$\text{D ≦ 7.0 x 10⁻³ f (22),}$

where f is the focal distance of the focusing lenses 15a, 15b and 15c. Therefore, when the sample 9 is inclined by 0,2° or more, reflected light Lᵣ is partly shielded by the apertures 16a, 16b and 16c, whereby the signals I₁, I₂ and I₃ fall to a lower level. One of these electric signals, signal I₃, for example, is monitored, and the minimum light intensity I₃ₘᵢₙ is preset by operating the preset circuit 26. Whenever the signal I₃ is at a level lower than I₃ₘᵢₙ, none of signals I₁, I₂ and I₃ are used in calculating the thickness d of the oil film 9b. This measure taken, the reliability of the photoelectric detectors 18a, 18b and 18c is maintained at 99% or more, and the measuring error of the apparatus can be reduced to ±5 Å.

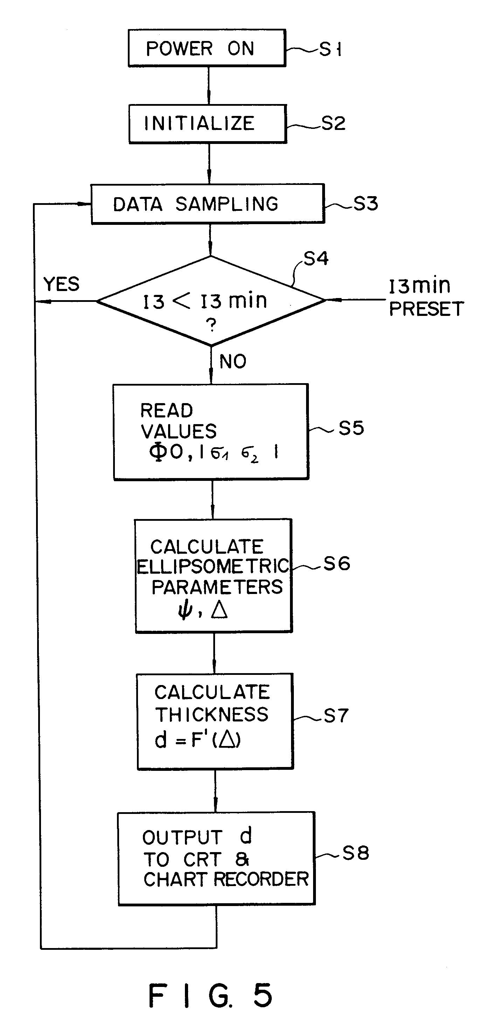

The operation of the microcomputer 22 will now be explained with reference to the flow chart of Fig. 5. When the power switch (not shown) of the apparatus is turned on in step S1, the light source 11 (Fig. 1) is turned on and starts emitting monochromatic light. At the same time, all components of the circuit shown in Fig. 4 are energized. In the next step, S2, the microcomputer 22 is initialized and then outputs gate signals G₁, G₂ and G₃. The gate signals G₁, G₂ and G₃ are supplied to S/H circuits 21a, 21b and 21c, thus clearing these S/H circuits. At the same time, channel gains, Φ₀, | σ₁ σ₂ |, and I₃ₘᵢₙ are preset by the preset circuit 26.

When the initialization of the microcomputer 22 is completed, the operation goes to step S3. In step S3, S/H circuits 21a, 21b and 21c sample the signals I₁, I₂ and I₃, which have been output from the beam channels ch1, ch2 and ch3, in response to the gate signals G₁, G₂ and G₃. Then, in step S4, the minimum light intensity I₃ₘᵢₙ is compared with the signal I₃ held by the S/N circuit 21c. If I₃ < I₃ₘᵢₙ, the sampled signals I₁, I₂ and I₃ are not valid for the calculating thickness d of the oil film 9b. In this case, the operation returns to step S3, in which the S/H circuits 21a, 21b and 21c sample the signals I₁, I₂ and I₃ again. If I₃ ≧ I₃ₘᵢₙ, the sampled signals I₁, I₂ and I₃ can be used to calculate the thickness d of the oil film 9b. In this case, the signals I₁, I₂ and I₃ are input to the microcomputer 22. The signals I₁, I₂ and I₃, which are represented by equations (11), (12) and (13), are processed by the microcomputer 22 in accordance with the equations (14) and (15), more precisely in accordance with the programs stored in microcomputer 22.

More specifically, in step S5, invariables Φ₀ and | σ₁ σ₂ | both specific to the optical flats 13a, 13b and 13c, are read out from a memory provided within the microcomputer 22. In step S6, the calculations identical to equations (14) and (15) are performed, thereby obtaining ellipsometric parameters ψ and Δ. These parameters are used in step S6, in which the calculation, (2), is carried out, thus obtaining the thickness d of the oil film 9b. The data representing the thickness d is converted into analog data by the D/A converter 24. In the next step, S8, this data is input to a cathode ray tube (not shown) or the chart recorder (not shown, either). Then, the operation returns to step S3.

The apparatus can obtain both ellipsometric parameters ψ and Δ and also the thickness d of the oil film 9b, substantially in real time though with an extremely short time lag corresponding to the response time of the photoelectric detectors 18a, 18b and 18c. Therefore, no noticeable time lags occur in measuring the thickness d even if the object 9 moves at 5 m/s or more.

All components of the optical system, which are essential to the measuring accuracy, are fixed. The apparatus requires no movable mechanical parts. Nor does it need Faraday elements, or magnetoelectric polarizing elements such as KDP elements. The apparatus can, therefore, be simple in structure, have a mechanical strength, and be free of the influence of temperature changes. In addition, since values, cos(Δ - Φ₀) and tan ψ are obtained as a ratio of light intensities, the measuring accuracy is not affected by changes in the intensity of polarized light Lᵢ applied to the object 9. Further, since the angle of view of the photoelectric detectors 18a, 18b and 18c is reduced to 0,2° or less, the influence of the inclination of the object 9 on the measuring accuracy can be minimized.

The present invention is by no means limited to the embodiment described above. In the embodiment of Fig. 3, instead of the three optical flats 13a, 13b and 13c in Fig. 1, four optical flats 13a, 13b, 13c and 13d made of the same material and having the same shape are placed parallel to one another to obtain 3 beams.

Since the 3 beams are parallel to one another, the alignment of the optics becomes considerably easy, and since the three beams are all reflected once on one of the optical flats, the power detected by the detectors, 18a, 18b and 18c becomes nearly the same level.

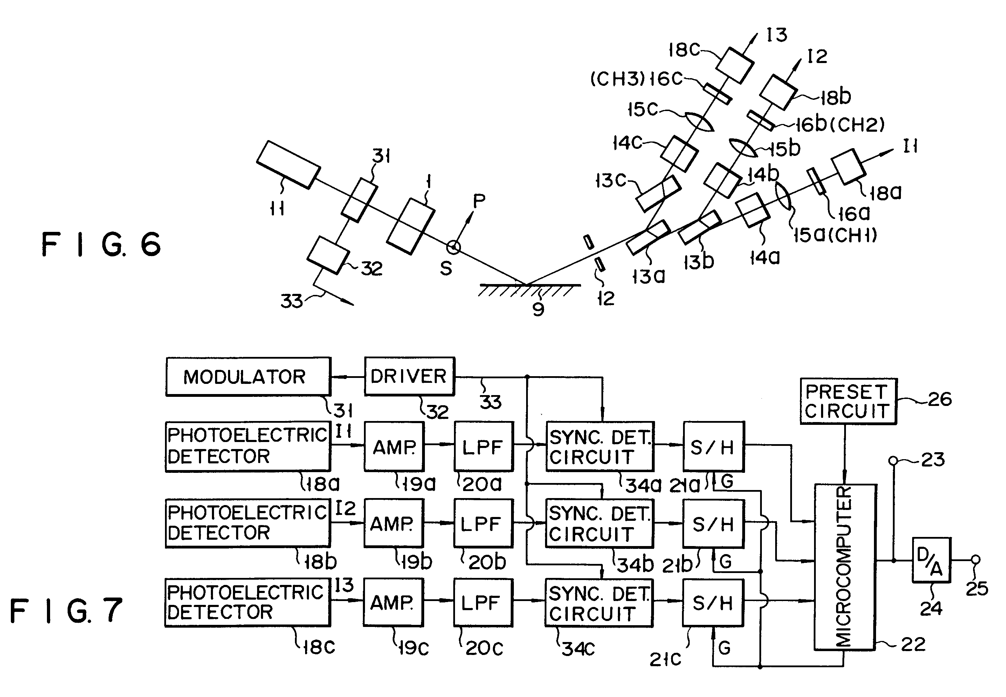

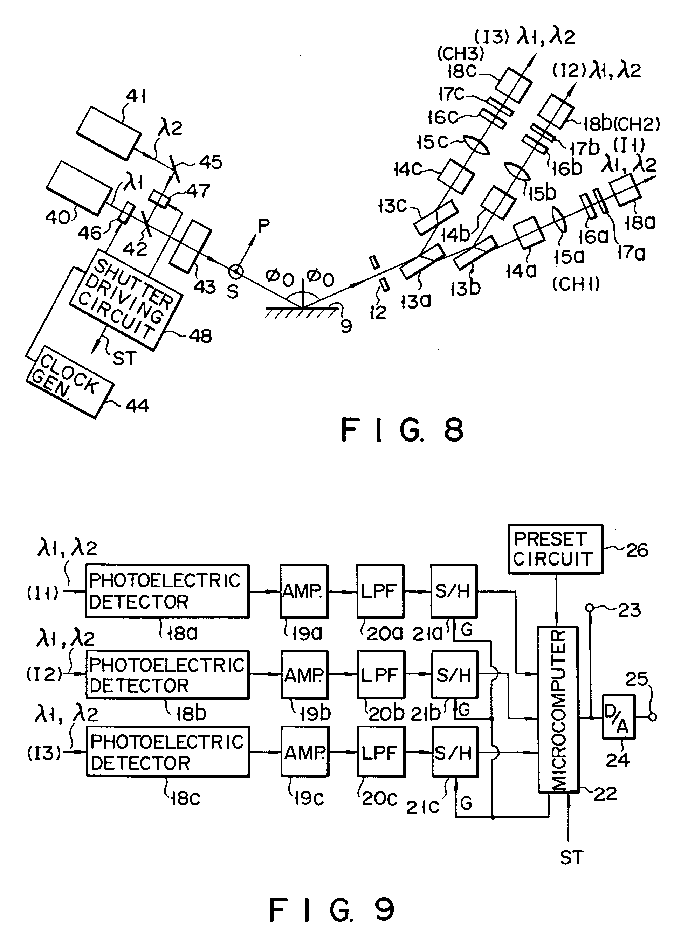

In the embodiment of Fig. 1, the interference filters 17a, 17b and 17c remove the light which has externally entered the optical system. As shown in Fig. 6, these filters 17a, 17b and 17c can be replaced by a modulator 31 such as a chopper, which is interposed between the light source 11 and the polarizer 1, and a drive circuit 32 for driving this modulator 31. When it is driven by the circuit 32, the modulator 31 modulates the monochromatic light emitted from the light source 11, thereby removing the externally applied light from the monochromatic light upon demodulation. In this instance, it is necessary to supply a modulation-reference signal 33 from the drive circuit 32 to synchronous detector circuits 34a, 34b and 34c, as is illustrated in Fig. 7, thereby to detect the output signals of the beam channels ch1, ch2 and ch3 in synchronism with the modulation.

In the embodiment shown in Figs. 1 and 4, the normals of the optical flats 13a, 13b and 13c exist in the incident plane. Nonetheless, the apparatus can measure the thickness d of the oil film 9b even if the optical flats 13a, 13b and 13c are positioned such that their normals are perpendicular to the incident plane. If this is the case, light Lᵣ will be reflected from the flats 13a, 13b and 13c in the horizontal direction, that is, in the direction perpendicular to the drawing of Fig. 1, and the polarization plane is rotated 90°. Hence, the equations (14) and (15) are changed to the following:

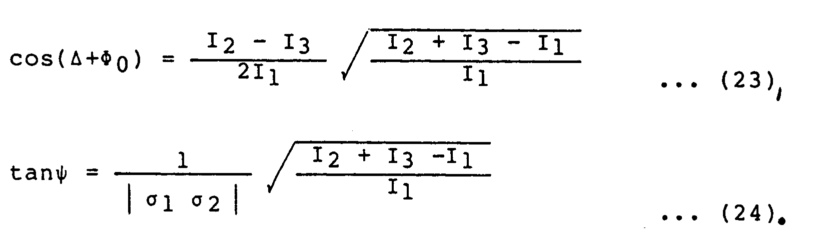

In the embodiment shown in Figs. 1 and 4, the object 9 moves at high speed. This does not mean that the apparatus cannot be applied to the measuring of the thickness of a thin film formed on an object not moving at all. The apparatus of the invention can be used to measure the thickness of any film of semiconductor devices or electronic devices. In other words, the apparatus can be employed as a high-speed, low-cost, film thickness-measuring apparatus in the semiconductor and electronic industries.

The apparatus shown in Figs. 1 and 4 can accurately measure the thickness d of the oil film 9b, provided that the refractive index of the steel plate 9a remains unchanged and has a relative smooth surface. When the refractive index or the surface roughness of the plate 9a varies as the steel plate 9a is moved, the variation of the refractive index or the surface roughness of the plate 9a inevitably influences the ellipsometric parameters ψ and Δ. Consequently, the apparatus cannot accurately measure the thickness of the oil film 9b.

Figs. 8 and 9 show a third embodiment of the invention, which can obtain correct ellipsometric parameters ψ and Δ, and can thus accurately measure the thickness d of the oil film 9b even if the refractive index or the surface roughness of the steel plate 9a changes while the plate 9a is moving. The third embodiment has means for applying to the oil film 9b two linearly polarized light beams having different wavelengths. It also has means for receiving the light beams reflected from the steel plate 9a coated with the oil film 9b, and calculating the thickness of the oil film 9b from the relationship between the phase-cosine of the light reflected from the steel plate 9a coated with oil film 9b, for the two light beams with different wavelengths. The relationship, from which the thickness of the film 9b is obtained, is the difference between these phase-cosine values, for example.

Before describing the structure of the apparatus shown in Figs. 8 and 9, the experiment conducted by the inventors hereof to invent this third embodiment will be explained.
(1) Two light beams having different wavelengths λ₁ and λ₂ were polarized into linearly polarized light beams. The polarized light beams were applied to a tin-plated steel plate at the same incidence angle. The light beam reflected from the surface of the steel plate had each an elliptical cross section. Phase cosines cosΔλ_{1,s} and cosΔλ_{2,s} of the reflected light beams changed in proportion to the slight change in the surface roughness or refractive index of the steel plate. That is:

   ${\text{cosΔλ}}_{\text{2,s}} {\text{= ℓcosΔλ}}_{\text{1,s}} \text{- m (25),}$

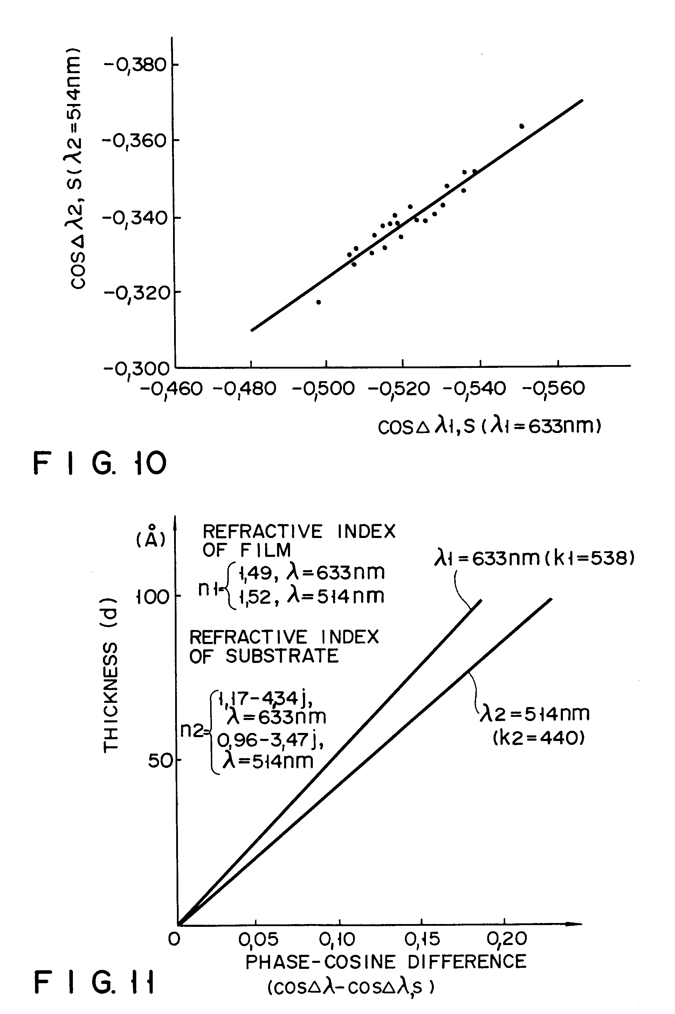

   where ℓ and m are constants determined by wavelengths λ₁ and λ₂. In this experiment, wavelengths λ₁ and λ₂ were 633 nm and 514 nm, respectively. Phase-cosine cosΔλ_{1,s} for the light ray having wavelength λ₁ and phase-cosine cosΔλ_{2,s} for the light ray having wavelength λ₂ changed in proportion to each other, as the surface roughness or refractive index of the steel plate varied slightly, as can be understood from the graph of Fig. 10.
(2) As far as a transparent film having a thickness of hundreds of angstroms or less and coated on a flat object was concerned, the difference between the phase-cosine of the light beam having wavelength λ₁ and reflected from the film on the substrate and the phase-cosine of the light beam having the same wavelength and reflected from the of the substrate without film was proportionate to the thickness d of the film. The same held true in the case of the light beam having wavelength λ₂. Namely:

   ${\text{d = k₁(cosΔλ₁ - cosΔλ}}_{\text{1,s}} \text{) (26),}$
   ${\text{d = k₂(cosΔλ₂ - cosΔλ}}_{\text{2,s}} \text{) (27),}$

   where k₁ is the proportional coefficient for wavelength λ₁, and k₂ is the proportional coefficient for wavelength λ₂. These coefficients k₁ and k₂ are constants determined by the incidence angle φ₀ of the linearly polarized light beam applied to the transparent film and by the properties of the film whose thickness d will be measured. More precisely, coefficients k₁ and k₂ can be regarded as being constant, provided that the complex refractive index N₂ of the substrate changes by ±10% or less as is represented by the following relation:

   $\text{| N₂ -} \overline{\text{N}} \text{₂ | ≦ 0,1 |} \overline{\text{N}} \text{₂ | (28).}$

Calculations were performed in accordance with equation (3), thereby ascertaining that equations (26) and (27) were true. Fig. 11 is a graph showing the relationship between the thickness d and the difference between phase-cosine cosΔ_{λ} and phase-cosine cosΔ_{λ,s}, that is (cosΔ_{λ} -cosΔ_{λ,s}) which is obtained from equations (26) and (27) for wavelength λ₁ of 633 nm and wavelength λ₂ of 514 nm. As may be understood from Fig. 11, the difference between the phase-cosine of the light reflected from the thin film on the substrate and the phase-cosine of the light reflected from the substrate without film is proportionate to the thickness d of the film. It follows that thickness d can be accurately measured from equations (25), (26) and (27), even if the refractive index or the surface roughness of the substrate changes. That is: 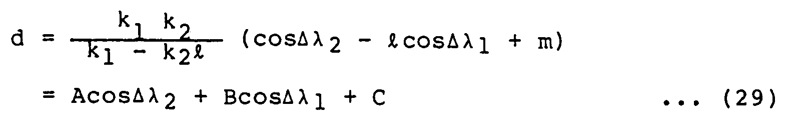
where A, B and C are constants which can be experimentally determined once incidence angle φ₀ has been set.

The structure of the apparatus shown in Figs. 8 and 9, which is the third embodiment of the invention, will now be described. Fig. 8 schematically illustrates the optical system of the third embodiment. The optical system includes two light sources 40 and 41. The light source 40 emits a collimated monochromatic ray having wavelength λ₁, and the light source 41 emits a collimated ray having wavelength λ₂. The ray emitted from the light source 40 passes a semi-transparent mirror 42 and is polarized by a polarizer 43 into a polarized ray. This polarized ray is applied to the surface of the object 9 at an incidence angle of φ₀. The ray emitted from the light source 41 is reflected by a reflector 45 and also by the semi-transparent mirror 42, and then polarized by the polarizer 43 into a polarized ray. This ray is also applied to the object 9 at the same incidence angle of φ₀. A shutter 46 is provided between the light source 40 and the semi-transparent mirror 42, and a shutter 47 is provided between the light source 41 and the semi-transparent mirror 42. These shutters 46 and 47 are driven by a shutter-driving circuit 48, and thus are opened and closed. A shutter-driving circuit 48 generates shutter drive signals ST, which are supplied to the microcomputer 22.

The light-receiving section of the optical system shown in Fig. 8 is identical to that of the optical system shown in Fig. 1. The same components as those of the section shown in Fig. 1 are designated by the same numerals in Fig. 8, and will not be described in detail.

Fig. 9 shows the signal-processing section of the third embodiment. This section is also identical to the signal-processing section of the first embodiment. The microcomputer 22 receives the output signals of the S/H circuits 21a, 21b and 21c in response to shutter drive signals ST supplied from the shutter-driving circuit 48. The microcomputer 22 processes these signals, thereby obtaining phase-cosine cosΔλ₁ for the polarized ray having wavelength λ₁ and also phase-cosine cosΔλ₂ for the polarized ray having wavelength λ₂, and then calculates the thickness d from the phase cosines thus obtained. The digital data showing the thickness d is output via the output terminal 23, and also input to the D/A converter 24. The D/A converter 24 converts the digital data to analog data. The analog data is input from the terminal 25 to a chart recorder (not shown).

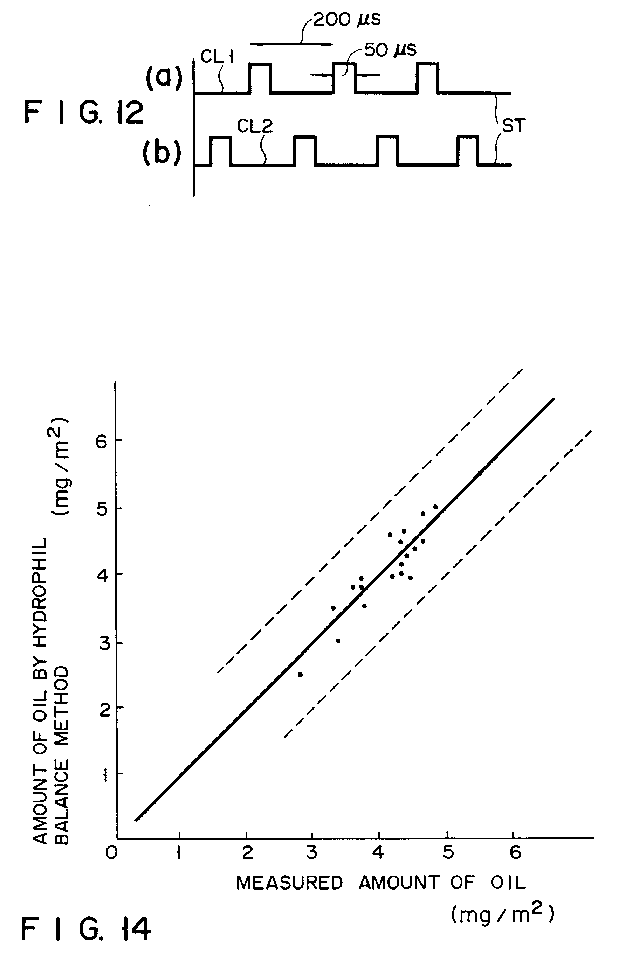

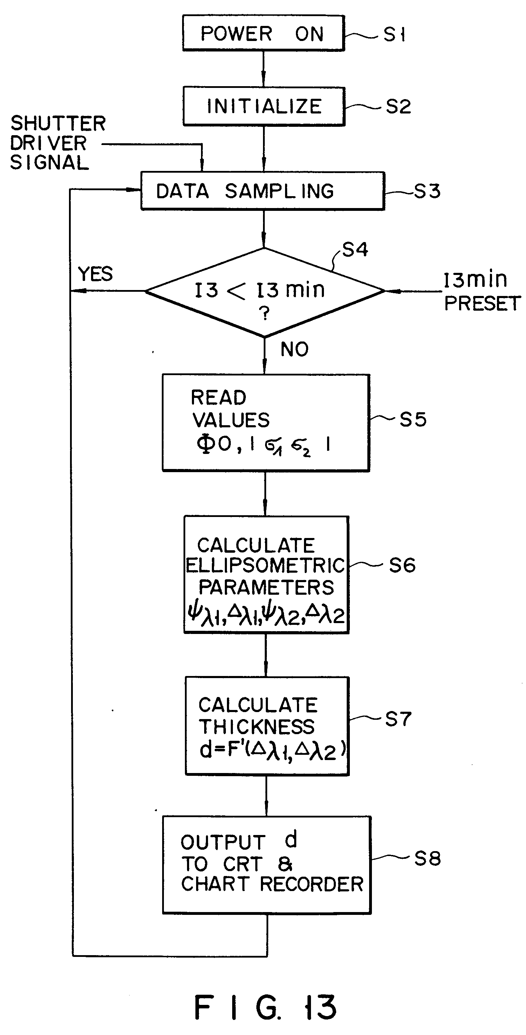

The operation of the third embodiment will now be explained. The shutter-driving circuit 48 opens one of two shutters 46 and 47, while closing the other of these shutters 46 and 47. More specifically, a clock generator 44 generates two clock signals CL1 and CL2 which are 180° out of phase with each other, as is illustrated in Figs. 12(a) and 12(b). Here, two acoustic optical modulator are used as two optical shutters. Clock signals CL1 and CL2 are supplied to the shutter-driving circuit 48. The circuit 48 supplies the clock signal CL1 to the shutter 46, and the clock signal CL2 to the shutter 47, whereby the shutters 46 and 47 are alternately opened and closed. When the shutter 46 is opened by the clock signal CL1, the Helium-Neon laser beam of wavelength λ₁ emitted from the light source 40 is applied to the object 9 via the semi-transparent mirror 42 and the polarizer 43, reflected from the object 9, and split into three beams by the optical flats 13a, 13b and 13c. These beams are applied to the photoelectric detectors 18a, 18b and 18c. When the shutter 47 is opened by the clock signal CL2, the Argon laser beam of wavelength λ₂ emitted from the light source 41 is applied to the object 9 after it has been reflected by the semi-transparent mirror 42 and passed through the polarizer 43. The polarized Argon laser beam is reflected from the object 9 and split into three beams by the optical flats 13a, 13b and 13c. The three beams are applied to the photoelectric detectors 18a, 18b and 18c.

The photoelectric detectors 18a, 18b and 18c generate electric signals representing (I₁)λ₁,λ₂ (I₂)λ₁,λ₂ and (I₃)λ₁,λ₂. The three electric signals are amplified by the amplifiers 19a, 19b and 19c, sampled and held by the S/H circuits 21a, 21b and 21c, and finally input to the microcomputer 22. The microcomputer 22 processes these input signals, thereby calculating phase-cosine Δλ₁ and Δλ₂ for wavelengths λ₁ and λ₂, as follows:

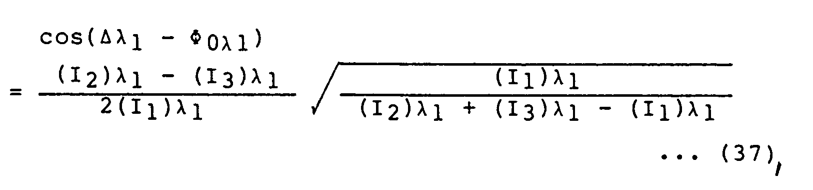

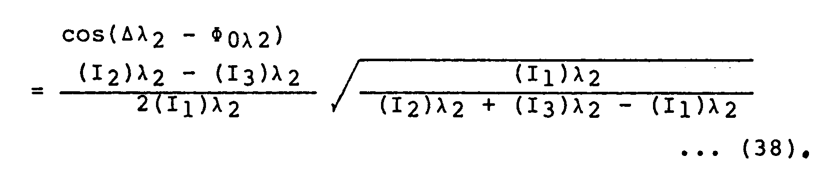

The following equation holds true: 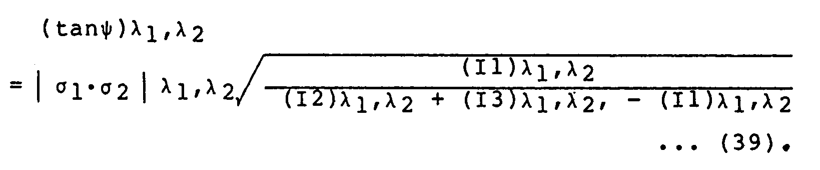
Therefore, the ellipsometric parameters ψ and Δ can be simultaneously obtained by substituting the values for the invariables, Φ_{0λ1}, λ₂ and | σ₁ σ₂ | λ₁, λ₂. Values Φ_{0λ1} and Φ_{0λ2}, both being invariables, can be corrected into cosΔλ1 and cosΔλ2.

Fig. 13 is a flow chart explaining the operation of microcomputer 22 used in the third embodiment shown in Figs. 8 and 9. The operation is identical to that of the microcomputer used in the first embodiment, except for the step of obtaining data about two different wavelengths λ₁ and λ₂. Therefore, it is not described in detail how the microcomputer 22 functions in the second embodiment.

Let us assume that the object 9 is a steel plate coated with an oil film. An amount M of oil coated on the steel plate is given:

$\text{M = δ x d (40),}$

where δ is the density of the oil, and d is the thickness of the oil film. As is evident from equation (40), the amount M and the thickness d are proportionate to each other. When polarized beam having a wavelength λ₁ of 633 nm, and a polarized beam having a wavelength λ₂ of 514 nm are applied to the object 9 at an incidence angle φ₀ of 70°, the amount M can be given as follows, provided that coefficients A (82,8), B (-57,7) and C (1,61) in equation (29) have been obtained by experiment:

$\text{M = 82,8(cosΔλ₂ - 0,697cosΔλ₁ + 0,0294) (41).}$

Hence, by substituting the actual values for cosΔλ₁ and cosΔλ₂, both contained in equation (41), we can obtain the amount M of oil coated on the steel plate. Fig. 14 shows the comparison of the amount M actually measured by the apparatus and the value M measured by the hydrophil balance method which is considered a reliable off-line, oil amount-measuring method. As is evident from Fig. 14, the values measured by the apparatus shown in Figs. 8 and 9 fell within a narrow range corresponding to ± 1 mg/m². Obviously, this apparatus according to the present invention can more accurately measure the thickness of a thin film than a conventional apparatus.

The present invention is not limited to the embodiments described above. It can be also applied to the case where the phase-cosines, cosΔλ₁ and cosΔλ₂, and the thickness d of the film have more general relationship with wavelengths λ₁ and λ₂:

${\text{cosΔλ₁ = f₁(d) + cosΔλ}}_{\text{1,s}} \text{(43),}$
${\text{cosΔλ₂ = f₂(d) + cosΔ}}_{\text{2,s}} \text{(44),}$

where the following relation holds within a certain variation range of the substrate properties:

${\text{cosΔλ}}_{\text{2,s}} {\text{= f₀(cosΔλ}}_{\text{1,s}} \text{) (42),}$

where f₀ is not necessarily a linear function.
Therefore:

$\text{cosΔλ₂ - f₂(d) = f₀{cosΔλ₁ - f₁(d)} (45).}$

As has been described above, the apparatus of the second embodiment of the present invention can accurately measure the thickness of a thin film coated on an object even if the refractive index of the object and other physical properties thereof continuously change.

## Claims

1. A film thickness-measuring apparatus, comprising:
- light -applying means (11, 1) including a polarizer (1) for applying a linearly polarized light beam, having a predetermined polarizing angle, to a film (9b) on an object (9a) at a predetermined incidence angle in order to measure the thickness of the film (9b);
- beam-splitting means (13a - 13d) for splitting a light beam (Lr) reflected from the film (9b) into a plurality of light beams;
- a plurality of analyzers (14a-14c) for extracting different polarized light components from the light beams supplied from the beam-splitting means (13a-13d);
- photoelectric conversion means (18a - 18c) for converting the light beams into corresponding electric signals representing the intensities of the respective light beams; and
- calculation means (22) for performing predetermined calculations on the electric signals supplied from the photo-electric conversion means (18a - 18c) to thereby obtain two ellipsometric parameters, an amplitude ratio ψ,and a phase Δ, and then calculate the thickness (d) of the film (9b) from the ellipsometric parameters thus obtained,
characterized in that the beam-splitting means (13a - 13d) are provided for splitting the light beam (Lr) reflected from the film (9b) into at least three light beams with the same spatial distribution as the reflected beam (Lr);
in that the analyzers (14a - 14c) are provided for extracting at least three linearly polarized light components of different respective polarizing angles from the at least three light beams, respectively;
in that the photoelectric conversion means (18a - 18c) are provided for converting the at least three light components into at least three corresponding electric signals (I1, I2, I3) representing the intensities of the respective at least three light components;
and in that the calculation means (22) are provided for performing calculations on the at least three electric signals (I1, I2, I3) supplied from the photoelectric conversion means (18a -18c).

2. The apparatus according to claim 1,
characterized in that the beam-splitting means (13a - 13d) comprise three optical flats (13a - 13c) made of the same material, having the same shape, positioned in parallel to one another, for splitting the light beam reflected from the film (9b), into three light beams.

3. The apparatus according to claim 1 or 2,
characterized in that the photoelectric conversion means (18a-18c) comprise:
- lens means (15a - 15c) for focusing the at least three light components, respectively, at a focal point;
- aperture means (16a - 16c) located at the focal point; and
- photoelectric detector means (18a - 18c) for generating an electric signal (I1, I2, I3) representing the intensity of a respective light component, from the at least three light components, passed through the aperture means (16a - 16c).

4. The apparatus according to any one of claims 1 to 3,
characterized in that a polarizing angle of the polarizer (1) is ϑ = 45°, and in that the analyzing angles of the analyzer means (14a - 14c) are α1 = 0°, α2 = 45° and α3 = -45°, so that the calculation means (22) calculate the amplitude ratio ψ and the phase Δ in accordance with the following equations: 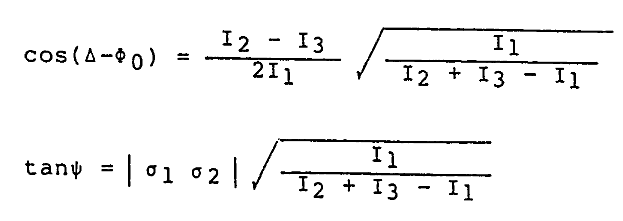 where I1, I2 and I3 are the intensities of the three light beams supplied from the three optical flats (13a - 13c), which are represented by the electric signals generated by the photo-electric conversion means (18a - 18c), wherein Φ0 and |σ1σ2| are specific to the optical flats (13a - 13c) with σ1 and σ2 being reflection coefficient ratios, and Φ0 is a phase difference between phases of ratios σ1 and σ2.

5. The apparatus according to any one of claims 1 to 4, characterized in that the beam-splitting means (13a - 13d) comprise four optical flats (13a - 13d) made of the same material, having the same shape, positioned in parallel to one another, for splitting the light beam (Lr) reflected from the film (9b), into three light beams,
and in that the analyzers (14a - 14c) comprise a plurality of analyzers (14a - 14c) having different analyzing angles, for passing the light beams supplied from the optical flats (13a - 13d).

6. The apparatus according to any one of claims 1 to 5,
characterized in that the apparatus has a measuring view the size of which is given as:
$\text{D ≦ 7,0 x 10⁻³ f}$
where f is the focal distance of the lens means (15a - 15c), and D is the diameter of the aperture means (16a - 16c).

7. The apparatus according to any one of claims 1 to 6,
characterized in that the polarizer (43) of the light-applying means (40, 41) applies at least two linearly polarized light beams having different wavelengths (λ1, λ2) and a predetermined orientation angle, to the film (9b) at the same predetermined incidence angle (Φ0) in order to measure the thickness of the film (9b).

8. The apparatus according to claim 7,
characterized in that it comprises two light-applying means (40, 46; 41, 45) connected in parallel and provided with shutters (45, 46) which are alternately opened and closed by driving means (44, 48).

## Patentansprüche

1. Schichtdicken-Meßvorrichtung, mit:
- einer Lichtbeaufschlagungseinrichtung (11, 1) mit einem Polarisator (1) zum Aufbringen eines linear polarisierten Lichtstrahls, der einen vorbestimmten Polarisationswinkel aufweist, auf eine filmartige Schicht (9b) auf einem Gegenstand (9a) in einem vorbestimmten Einfallswinkel zum Messen der Dicke der Schicht (9b);
- Strahlteilereinrichtungen (13a - 13d) zum Zerlegen eines von der Schicht (9b) reflektierten Lichtstrahls (Lr) in eine Vielzahl von Lichtstrahlen;
- einer Vielzahl von Analysatoren (14a - 14c) zum Extrahieren verschiedener polarisierter Lichtkomponenten aus den Lichtstrahlen, die von den Strahlteilereinrichtungen (13a - 13d) zugeführt werden;
- fotoelektrischen Umwandlungseinrichtungen (18a - 18c) zum Umwandeln der Lichtstrahlen in entsprechende elektrische Signale, die die Intensitäten der jeweiligen Lichtstrahlen repräsentieren; und
- Recheneinrichtungen (22) zum Durchführen vorbestimmter Rechenvorgänge mit den von den fotoelektrischen Umwandlungseinrichtungen (18a - 18c) zugeführten elektrischen Signalen, um dadurch zwei ellipsometrische Parameter, ein Amplitudenverhältnis ψ und eine Phase Δ, zu erhalten sowie anschließend die Dicke (d) der Schicht (9b) aufgrund der auf diese Weise erhaltenen ellipsometrischen Parameter zu berechnen,
dadurch gekennzeichnet,
daß die Strahlteilereinrichtungen (13a - 13d) zum Zerlegen des von der Schicht (9b) reflektierten Lichtstrahls (Lr) in wenigstens drei Lichtstrahlen mit derselben räumlichen Verteilung wie der reflektierte Strahl (Lr) vorgesehen sind;
daß die Analysatoren (14a - 14c) zum Extrahieren von wenigstens drei linear polarisierten Lichtkomponenten mit jeweils verschiedenen Polarisationswinkeln aus den wenigstens drei Lichtstrahlen vorgesehen sind;
daß die fotoelektrischen Umwandlungseinrichtungen (18a - 18c) zum Umwandeln der wenigstens drei Lichtkomponenten in wenigstens drei entsprechende elektrische Signale (I1, I2, I3) vorgesehen sind, die die Intensitäten der jeweiligen wenigstens drei Lichtkomponenten repräsentieren;
und daß die Recheneinrichtungen (22) zum Ausführen von Rechenvorgängen mit den wenigstens drei von den fotoelektrischen Umwandlungseinrichtungen (18a - 18c) zugeführten elektrischen Signalen (I1, I2, I3) vorgesehen sind.

2. Vorrichtung nach Anspruch 1,
dadurch gekennzeichnet,
daß die Strahlteilereinrichtungen (13a - 13d) drei optische Planflächen (13a - 13c) aufweisen, die aus demselben Material hergestellt sind, dieselbe Form aufweisen und parallel zueinander angeordnet sind, um den von der Schicht (9b) reflektierten Lichtstrahl in drei Lichtstrahlen zu zerlegen.

3. Vorrichtung nach Anspruch 1 oder 2,
dadurch gekennzeichnet,
daß die fotoelektrischen Umwandlungseinrichtungen (18a - 18c) folgendes aufweisen:
- Linseneinrichtungen (15a - 15c) zum Fokussieren der jeweils wenigstens drei Lichtkomponenten in einem Brennpunkt;
- bei dem Brennpunkt liegende Apertureinrichtungen (16a - 16c);
- fotoelektrische Detektoreinrichtungen (18a - 18c) zum Erzeugen eines elektrischen Signals (I1, I2, I3), das die Intensität einer jeweiligen Lichtkomponente repräsentiert, aus den durch die Apertureinrichtungen (16a - 16c) hindurchtretenden, wenigstens drei Lichtkomponenten.

4. Vorrichtung nach einem der Ansprüche 1 bis 3,
dadurch gekennzeichnet,
daß ein Polarisationswinkel des Polarisators (1) ϑ = 45° ist, und daß die Analysationswinkel der Analysatoreinrichtungen (14a - 14c) α1 = 0°, α2 = 45° und α3 = -45° sind, so daß die Recheneinrichtungen (22) das Amplitudenverhältnis ψ und die Phase Δ gemäß den nachfolgenden Gleichungen berechnen: 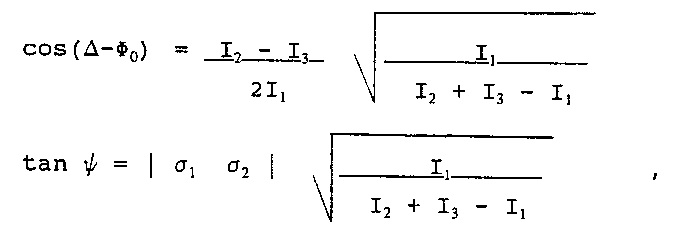 wobei I1, I2 und I3 die Intensitäten der drei von den drei optischen Planflächen (13a - 13c) zugeführten Lichtstrahlen sind, welche durch die von den fotoelektrischen Umwandlungseinrichtungen (18a - 18c) erzeugten elektrischen Signale repräsentiert werden, wobei Φ0 und |σ₁ σ₂| für die optischen Planflächen (13a - 13c) spezifisch sind, wobei σ₁ und σ₂ Reflexionskoeffizientenverhältnisse sind und Φ0 eine Phasendifferenz zwischen Phasen der Verhältnisse σ₁ und σ₂ ist.

5. Vorrichtung nach einem der Ansprüche 1 bis 4,
dadurch gekennzeichnet,
daß die Strahlteilereinrichtungen (13a - 13d) vier optische Planflächen (13a - 1d) aufweisen, die aus demselben Material hergestellt sind, dieselbe Form aufweisen und parallel zueinander angeordnet sind, um den von der Schicht (9b) reflektierten Lichtstrahl (Lr) in drei Lichtstrahlen zu zerlegen,
und daß die Analysatoren (14a - 14c) eine Vielzahl von Analysatoren (14a - 14d) mit unterschiedlichen Analysationswinkeln für den Durchgang der von den optischen Planflächen (13a - 13d) zugeführten Lichtstrahlen aufweisen.

6. Vorrichtung nach einem der Ansprüche 1 bis 5,
dadurch gekennzeichnet,
daß die Vorrichtung einen Meßbereich aufweist, dessen Größe wie folgt ist:
$\text{D ≦ 7,0 x 10⁻³ f ,}$
wobei f die Brennweite der Linseneinrichtungen (15a - 15c) ist und D der Durchmesser der Apertureinrichtungen (16a - 16c) ist.

7. Vorrichtung nach einem der Ansprüche 1 bis 6,
dadurch gekennzeichnet,
daß der Polarisator (43) der Lichtbeaufschlagungseinrichtung (40, 41) wenigstens zwei linear polarisierte Lichtstrahlen mit unterschiedlichen Wellenlängen (λ1, λ2) und einem vorbestimmten Orientierungswinkel auf die Schicht (9b) mit demselben vorbestimmten Einfallswinkel (Φ0) aufbringt, um die Dicke der Schicht (9b) zu messen.

8. Vorrichtung nach Anspruch 7,
dadurch gekennzeichnet,
daß sie zwei Lichtbeaufschlagungseinrichtungen (40, 46; 41, 45) aufweist, die parallel zueinander geschaltet sind und mit Verschlußeinrichtungen (45, 46) versehen sind, die von einer Antriebseinrichtung (44, 48) abwechselnd geöffnet und geschlossen werden.

## Revendications

1. Un appareil de mesure de l'épaisseur d'un film comprenant :
- un moyen d'application de lumière (11, 1) comprenant un polariseur (1) pour appliquer un faisceau de lumière polarisée linéairement ayant un angle d'incidence brewstérienne prédéterminé, à un film (9b) sur un objet (9a) à un angle d'incidence prédéterminé afin de mesurer l'épaisseur du film (9b);
- des moyens de décomposition de faisceau (13a - 13d) pour décomposer un faisceau lumineux (Lr) réfléchi par le film (9b) en une pluralité de faisceaux lumineux;
- une pluralité d'analyseurs (14a - 14c) pour extraire différentes composantes de lumière polarisée des faisceaux lumineux fournis par les moyens de décomposition de faisceau (13a - 13d);
- des moyens de conversion photo-électriques (18a - 18c) pour convertir les faisceaux lumineux en signaux électriques correspondants représentant les intensités des faisceaux lumineux respectifs; et
- des moyens de calcul (22) pour effectuer des calculs prédéterminés sur les signaux électriques fournis par les moyens de conversion photo-électriques (18a - 18c) pour obtenir par ce moyen deux paramètres ellipsométriques, un rapport d'amplitude ψ et une phase Δ et calculer ensuite l'épaisseur (d) du film (9b) à partir des rapports ellipsométriques ainsi obtenus,
caractérisé en ce que les moyens de décomposition de faisceau (13a - 13d) sont prévus pour décomposer le faisceau lumineux (Lr) réfléchi par le film (9b) en au moins trois faisceaux lumineux avec la même distribution spaciale que le faisceau réfléchi (Lr);
en ce que les analyseurs (14a - 14c) sont prévus pour extraire au moins trois composantes de lumière polarisée linéairement ayant des angles de polarisation respectifs différents à partir d'au moins trois faisceaux lumineux, respectivement;
en ce que les moyens de conversion photo-électriques (18a - 18c) sont prévus pour convertir les au moins trois composantes de lumière en au moins trois signaux électriques (I1, I2, I3) correspondants représentant les intensités des au moins trois composantes de lumière correspondantes;
et en ce que les moyens de calcul (22) sont prévus pour effectuer des calculs sur au moins trois signaux électriques (I1, I2, I3) fournis par les moyens de conversion photo-électriques.

2. L'appareil selon la revendication 1,
caractérisé en ce que les moyens de décomposition de faisceau (13a - 13d) comprennent trois plans optiques (13a - 13c) du même matériau, ayant la même forme, positionnés en parallèle les uns aux autres, pour décomposer le faisceau lumineux réfléchi par le film (9b) en trois faisceaux lumineux.

3. L'appareil selon la revendication 1 ou 2,
caractérisé en ce que les moyens de conversion photo-électriques (18a - 18c) comprennent :
- des moyens à lentilles (15a - 15c) pour focaliser les au moins trois composantes de lumière, respectivement, à un foyer;
- des moyens à diaphragme (16a - 16c) disposés au foyer et
- des moyens détecteurs photo-électriques (18a - 18c) pour générer un signal électrique (I1, I2, I3) représentant l'intensité d'une composante de lumière respective, à partir des au moins trois composantes de lumière, ayant traversé les moyens à diaphragme (16a - 16c).

4. L'appareil selon l'une quelconque des revendications 1 à 3,
caractérisé en ce qu un angle d'incidence brewstérienne du polariseur (1) est Θ = 45° et en ce que les angles d'analyse des moyens à analyseurs (14a - 14c) sont α1 = 0°, α2 = 45° et α3 = - 45°, de telle manière que les moyens de calcul (22) calculent le rapport d'amplitude ψ et la phase Δ conformément aux équations suivantes : 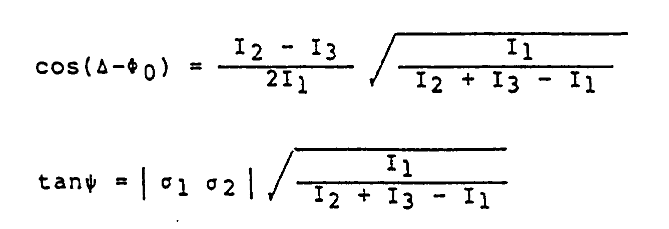 dans lesquelles I1, I2 et I3 sont les intensités des trois faisceaux lumineux fournis par les trois plans optiques (13a - 13c), qui sont représentées par les signaux électriques générés par les moyens de conversion photo-électriques (18a - 18c), dans lesquelles φ 0 et |σ1 σ2 | sont spécifiques aux plans optiques (13a - 13c) avec σ1 et σ2 étant des rapports de coefficients de réflexion et φ 0 est une différence de phases entre les phases σ1 et σ2.

5. L'appareil selon l'une quelconque des revendications 1 à 4,
caractérisé en ce que les moyens de décomposition de faisceau (13a - 13d) comprennent quatre plans optiques (13a - 13d) faits du même matériau, ayant la même forme, positionnés en parallèle les uns aux autres, pour décomposer le faisceau lumineux (Lr) réfléchi par le film (9b) en trois faisceaux lumineux,
et en ce que les analyseurs (14a - 14c) comprennent une pluralité d'analyseurs (14a - 14c) ayant des angles d'analyse différents pour faire passer les faisceaux lumineux fournis par les plans optiques (13a - 13d).

6. L'appareil selon l'une quelconque des revendications 1 à 5,
caractérisé en ce que l'appareil a un champ de mesure dont la dimension est donnée par :
$\text{D ≦ 7.0 x 10⁻³ f}$
où f est la distance focale des moyens à lentilles (15a - 15c) et D est le diamètre des moyens à diaphragme (16a - 16c).

7. L'appareil selon l'une quelconque des revendications 1 à 6,
caractérisé en ce que le polariseur (43) du moyen d'application de lumière (40, 41) applique au moins deux faisceaux de lumière polarisée linéairement, ayant des longueurs d'onde (λ1, λ2) différentes et un angle d'orientation prédéterminé, au film (9b) sous le même angle d'incidence (φ 0) prédéterminé afin de mesurer l'épaisseur du film (9b).

8. L'appareil selon la revendication 7,
caractérisé en ce qu'il comprend deux moyens d'application de lumière (40, 46; 41, 45) connectés en parallèles et munis d'obturateurs (45, 46) qui sont alternativement ouverts et fermés par des moyens moteurs (44, 48).
